# EUROPEAN PATENT APPLICATION

(11) **EP 4 792 953 A1**
(43) Date of publication of application: **19.08.2026**
(21) Application number: 24885808.6
(22) Date of filing: 31.10.2024
(51) Int. Cl.: B22F 1/052, B22F 1/00, B22F 10/28, B22F 10/34, B22F 10/36, B33Y 70/00, B33Y 80/00, C22C 9/00, C22C 9/02, C22C 9/04, C22C 9/06, C22C 9/10, C22C 30/02

(54) **METAL POWDER FOR ADDITIVE MANUFACTURING, AND ADDITIVELY MANUFACTURED OBJECT**

(30) Priority: 03.11.2023 JP 2023188963
(71) Applicant: Fukuda Metal Foil & Powder Co., Ltd., Kyoto 600-8435 (JP)
(72) Inventor: SUGITANI, Yuji, Kyoto-shi, Kyoto 607-8305 (JP); OTOBE, Katsunori, Kyoto-shi, Kyoto 607-8305 (JP)
(74) Representative: Betten & Resch
(86) International application number: PCT/JP2024/038832
(87) International publication number: WO 2025/095041

(57) **Abstract**

To form a stable powder bed for obtaining a high-density additively manufactured product having a relative density of not lower than 99%, there is provided a metal powder for additive manufacturing used to manufacture an additively manufactured product by an additive manufacturing method, wherein a -63 µm +45 µm sieve particle size (mass%) is not lower than 9% and a particle size D5 is not smaller than 9 µm. An additively manufactured product manufactured by an additive manufacturing apparatus using the metal powder for additive manufacturing has a relative density of not lower than 99.0%.

## Description

### TECHNICAL FIELD

The present invention relates to a metal powder for additive manufacturing and an additively manufactured product.

### BACKGROUND ART

In the above technical field, patent literature 1 discloses that when additive manufacturing is performed by forming a powder bed by a metal powder with characteristics defined by an average particle size D50 and a TD (Tapped Density), an additively manufactured product having a relative density of 95% or higher is obtained.

### CITATION LIST

### PATENT LITERATURE

Patent literature 1: Japanese Patent Laid-Open No. 2021-017639

### SUMMARY OF THE INVENTION

### TECHNICAL PROBLEM

However, when the relative density is 95%, open pores occur and an error such as leakage is thus considered in a case where a fluid is handled as an application of an additively manufactured product. Therefore, to obtain a high-density additively manufactured product having a relative density of 99% or higher, it is necessary to form a more stable powder bed.

The present invention enables to provide a technique of solving the above-described problem.

### SOLUTION TO PROBLEM

One example aspect of the present invention provides a metal powder for additive manufacturing used to manufacture an additively manufactured product by an additive manufacturing method, wherein
a -63 µm +45 µm sieve particle size (mass%) is not lower than 9% and a particle size D5 is not smaller than 9 µm.

Another example aspect of the present invention provides an additively manufactured product additively manufactured by an additive manufacturing apparatus using the metal powder for additive manufacturing, wherein
the additively manufactured product has a relative density of not lower than 99.0%.

### ADVANTAGEOUS EFFECTS OF INVENTION

According to the present invention, it is possible to form a stable powder bed for obtaining a high-density additively manufactured product having a relative density of 99% or higher.

### BRIEF DESCRIPTION OF DRAWINGS

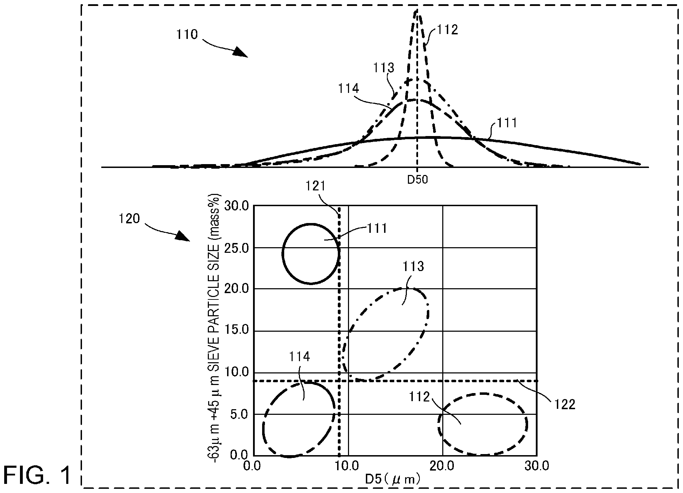

Fig. 1 is a view showing the particle size distribution of an average particle size D50 and the relationship between a particle size D5 corresponding to the particle size distribution and a -63 µm +45 µm sieve particle size (mass%);

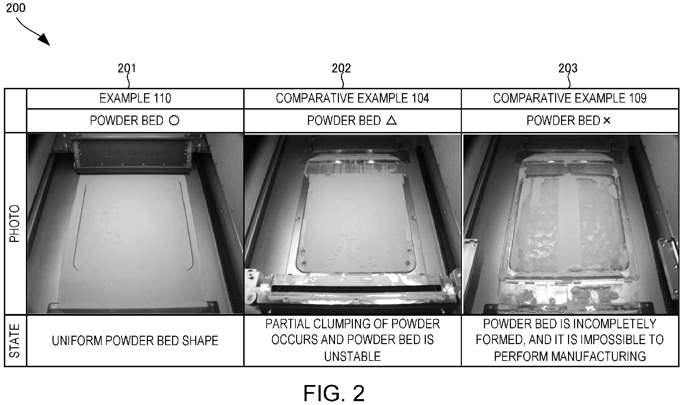

Fig. 2 is a view showing an evaluation result of a powder bed according to each of an example and comparative examples;

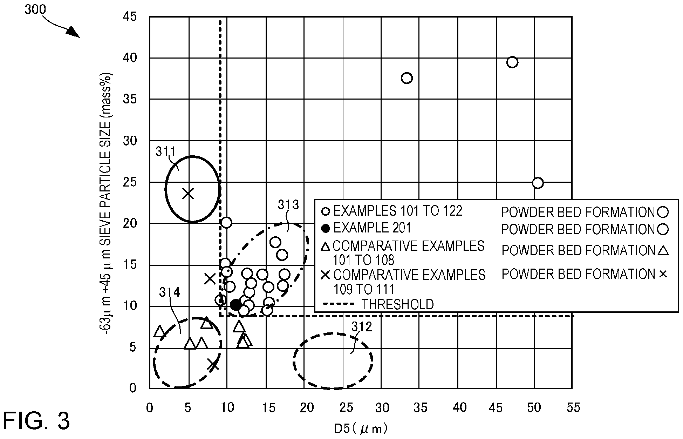

Fig. 3 is a graph showing the relationship between the particle size D5 of a metal powder for additive manufacturing and the -63 µm +45 µm sieve particle size (mass%) according to each of examples and comparative examples;

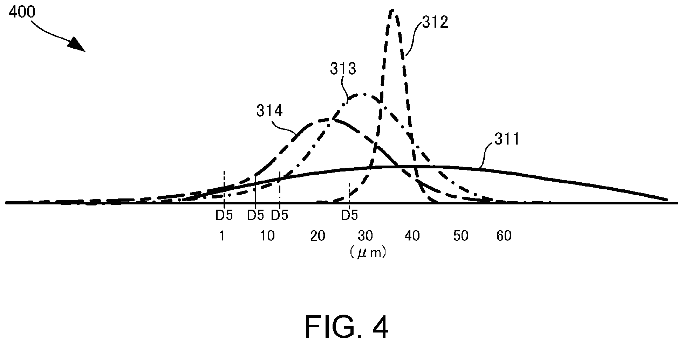

Fig. 4 is a graph showing a particle size distribution in each region of Fig. 3 with the value of the particle size D5 on the abscissa;

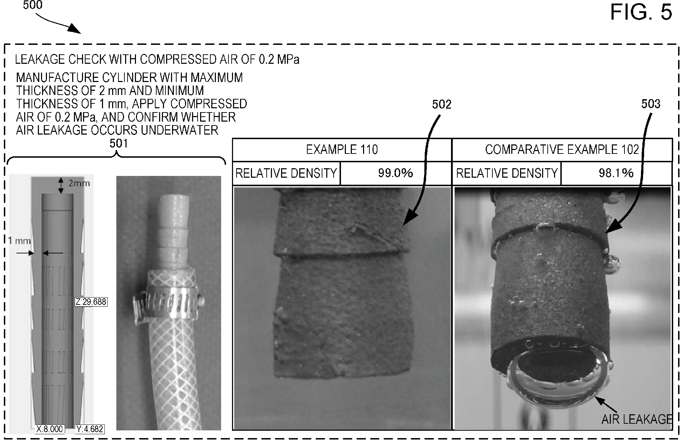

Fig. 5 is a view showing air leakage of a cylinder as an additively manufactured product according to each of the example and comparative example;

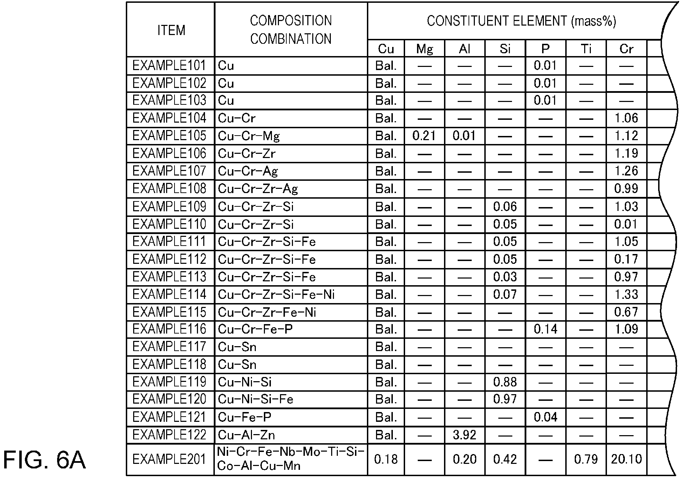

Fig. 6A is a table showing experimental results on the relationship among the -63 µm +45 µm sieve particle size (mass%), the particle size D5 (µm), the quality and stability of formation of a powder bed, and the relative density of the additively manufactured product in various combinations of metals and elements;

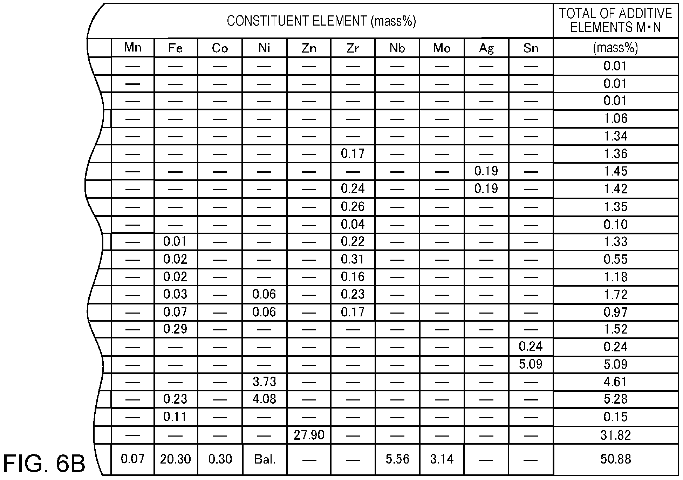

Fig. 6B is a table showing experimental results on the relationship among the -63 µm +45 µm sieve particle size (mass%), the particle size D5 (µm), the quality and stability of formation of a powder bed, and the relative density of the additively manufactured product in various combinations of metals and elements;

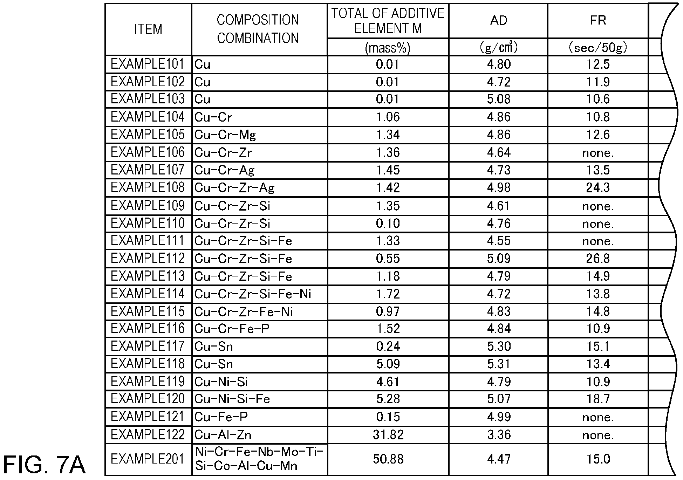

Fig. 7A is a table showing experimental results on the relationship among the -63 µm +45 µm sieve particle size (mass%), the particle size D5 (µm), the quality and stability of formation of a powder bed, and the relative density of the additively manufactured product in various combinations of metals and elements;

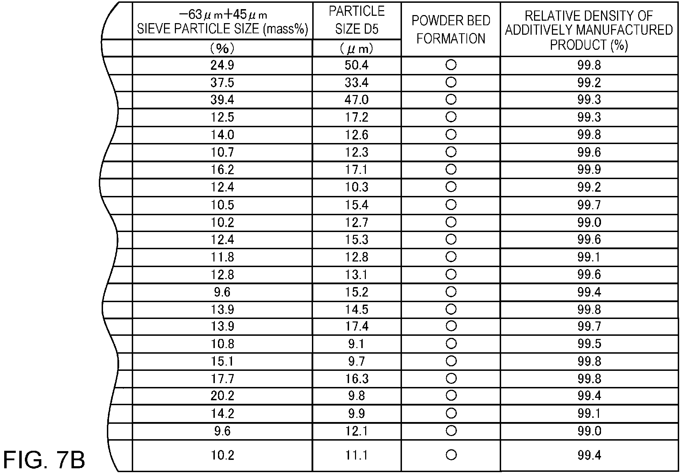

Fig. 7B is a table showing experimental results on the relationship among the -63 µm +45 µm sieve particle size (mass%), the particle size D5 (µm), the quality and stability of formation of a powder bed, and the relative density of the additively manufactured product in various combinations of metals and elements;

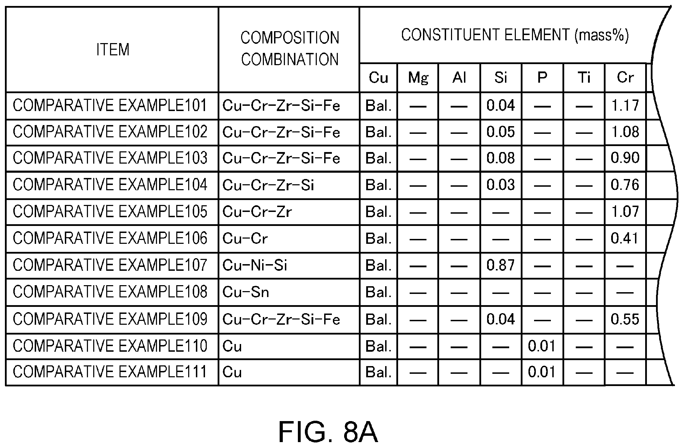

Fig. 8A is a table showing experimental results on the relationship among the -63 µm +45 µm sieve particle size (mass%), the particle size D5 (µm), the quality and stability of formation of a powder bed, and the relative density of the additively manufactured product in various combinations of metals and elements;

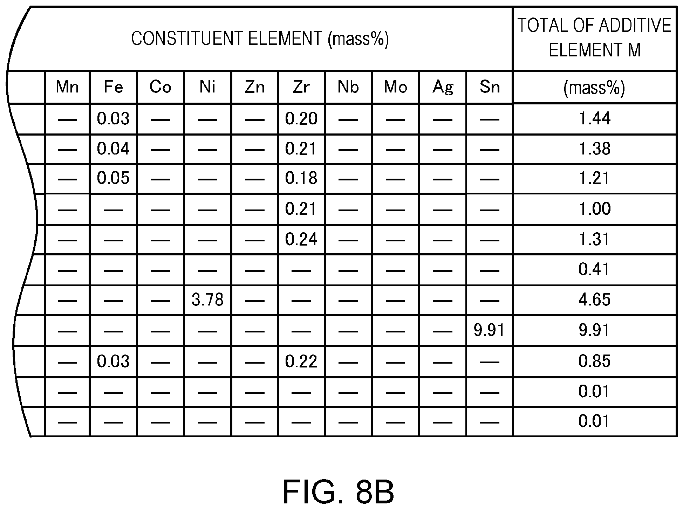

Fig. 8B is a table showing experimental results on the relationship among the -63 µm +45 µm sieve particle size (mass%), the particle size D5 (µm), the quality and stability of formation of a powder bed, and the relative density of the additively manufactured product in various combinations of metals and elements;

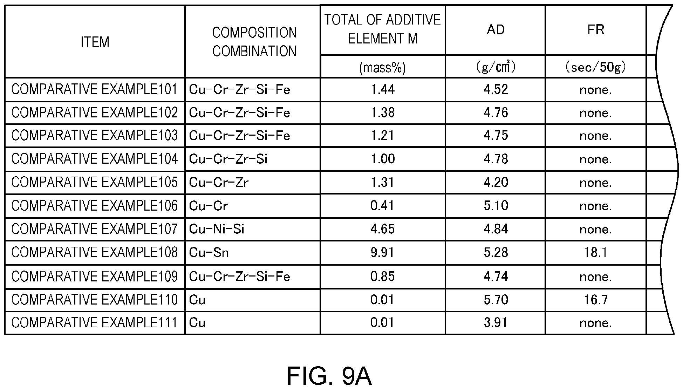

Fig. 9A is a table showing experimental results on the relationship among the -63 µm +45 µm sieve particle size (mass%), the particle size D5 (µm), the quality and stability of formation of a powder bed, and the relative density of the additively manufactured product in various combinations of metals and elements; and

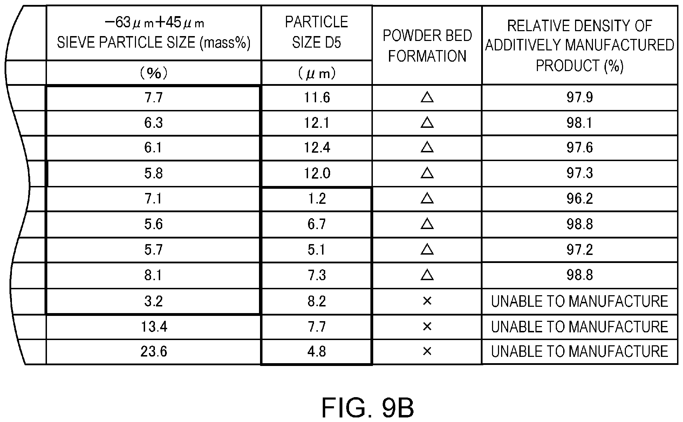

Fig. 9B is a table showing experimental results on the relationship among the -63 µm +45 µm sieve particle size (mass%), the particle size D5 (µm), the quality and stability of formation of a powder bed, and the relative density of the additively manufactured product in various combinations of metals and elements.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

A copper alloy powder (an alloy powder with copper as a main constituent element) will be described as a metal powder for additive manufacturing according to this example embodiment. Before that, the current situation of copper alloy powders for additive manufacturing will be described.

### <Current Situation of Metal Powders for Additive Manufacturing>

Patent literature 1 discloses that when additive manufacturing is performed by forming a powder bed by a metal powder with characteristics defined by an average particle size D50 and a TD (Tapped Density), an additively manufactured product having a relative density of 95% or higher is obtained.

However, the average particle size D50 represents a median of the particle size distribution of the powder. Therefore, as indicated by a particle size distribution 110 shown in Fig. 1, even for powders having the same value of the average particle size D50, a broad particle size distribution 111 with a large amount of fine particles and a large amount of coarse particles and a sharp particle size distribution 112 with almost no fine particles or coarse particles are assumed. Therefore, the amounts of fine particles and coarse particles are not clearly known from the value of the average particle size D50. Even if the average particle size D50 is adjusted, a powder bed may not be stabilized. When the relative density of an additively manufactured product becomes below 99%, a malfunction occurs due to an error such as leakage especially in a case where a fluid is handled.

Particle size distributions 113 and 114 shown in Fig. 1 indicate intermediate particle size distributions between the broad particle size distribution 111 and the sharp particle size distribution 112, and are expected to include a particle size distribution with which a powder bed is stably generated and the relative density of an additively manufactured product is stabilized at 99% or higher.

### <Metal Powder for Additive Manufacturing according to This Example Embodiment>

The present inventor has paid attention to, as characteristics that define the particle size distribution with which the powder bed is stably generated and the relative density of an additively manufactured product is stabilized at 99% or higher, a particle size D5 (µm) representing the size of a fine particle that hinders a powder bed and a -63 µm +45 µm sieve particle size (mass%) indicating an amount of coarse particles for stably forming a powder bed by improving the fluidity and the density of the powder bed. The particle size D5 is a value obtained by a laser diffraction method, and the -63 µm +45 µm sieve particle size (mass%) is a value obtained by test sieving defined in JIS Z 8815: 1994.

The particle size distributions 111 to 114 of powders having the same value of the average particle size D50 are on a graph 120 of the -63 µm +45 µm sieve particle size (mass%) in which the abscissa represents the particle size D5 (µm) indicating the size of the fine particle and the ordinate represents the amount of coarse particles for stably forming a powder bed. Based on the results of examples and comparative examples, a particle size threshold 121 (the particle size D5 is 9 µm) and a sieve particle size threshold 122 (the -63 µm +45 µm sieve particle size (mass%) is 9%) that separate the particle size distribution 113 with which the powder bed is stably generated and the relative density of the additively manufactured product is stabilized at 99% or higher and the remaining particle size distributions 111, 112, and 114.

A powder having the particle size D5 smaller than 9 µm and the -63 µm +45 µm sieve particle size (mass%) equal to or higher than 9% has a broad particle size distribution like the particle size distribution 111. Therefore, while a metal powder for additive manufacturing is stored in an additive manufacturing apparatus, segregation occurs, thereby making it impossible to stably form a powder bed before completion of additive manufacturing.

A powder having the particle size D5 equal to or larger than 9 µm and the -63 µm +45 µm sieve particle size (mass%) lower than 9% is a powder having fluidity and a sharp satisfactory particle size distribution like the particle size distribution 112. However, the density of the powder bed decreases when particles sizes are too uniform, thereby decreasing the relative density. In addition, a powder manufactured by an atomization method or the like requires sieving within a very narrow partilcle size range, and thus productivity is low.

A powder having the particle size D5 smaller than 9 µm and the -63 µm +45 µm sieve particle size (mass%) lower than 9% is a powder having a particle size distribution with a certain balance like the particle size distribution 114. However, since the entire powder is finely micronized, fluidity is impaired and it becomes impossible to form a powder bed.

By using a metal powder having the particle size distribution 113 as a particle size distribution managed so that the -63 µm +45 µm sieve particle size (mass%) is 9% or higher and the particle size D5 (volume distribution) by the laser diffraction method is 9 µm or more, a high-density (a relative density of 99% or higher) additively manufactured product is stably obtained.

### [First Example Embodiment]

A copper powder and a copper alloy powder (an alloy powder with copper as a main constituent element) will be described as metal powders for additive manufacturing according to the first example embodiment.

A copper powder according to this example embodiment contains copper and unavoidable impurities. Examples of the unavoidable impurities are 0.01 mass% or less of P and Al.

A copper alloy powder according to this example embodiment contains 0.01 mass% or more to 32.0 mass% or less of an additive element M (at least one element of Mg, Al, Si, P, Cr, Fe, Ni, Zn, Zr, Ag, and Sn), and the balance is copper and unavoidable impurities.

The additive element M is added to improve the characteristics (fluidity and the like) of the copper alloy powder, the characteristics (laser reflectance, laser absorbance, and the like) at the time of additive manufacturing, and the characteristics (mechanical characteristics: strength, abrasion resistance, toughness, and the like, physical characteristics: electrical conductivity, heat resistance, and the like) of an additively manufactured product. However, this example embodiment has found a condition for specifying such copper alloy powder that a powder bed is stably generated and the relative density of the additively manufactured product is stabilized at 99% or higher.

Note that each element of the additive element M is added such that the total amount of the additive elements M falls within a range of 0.01 mass% or more to 32.0 mass% or less. For example, Al falls within a range of 0.01 mass% or more to 3.92 mass% or less. Si falls within a range of 0.03 mass% or more to 0.97 mass% or less. P falls within a range of 0.01 mass% or more to 0.14 mass% or less. Cr falls within a range of 0.01 mass% or more to 1.33 mass% or less. Fe falls within a range of 0.01 mass% or more to 0.29 mass% or less. Ni falls within a range of 0.06 mass% or more to 4.08 mass% or less. Zr falls within a range of 0.04 mass% or more to 0.31 mass% or less. Sn falls within a range of 0.24 mass% or more to 5.09 mass% or less.

### <Manufacturing Method of Copper Alloy Powder>

The manufacturing method of the copper alloy powder for additive manufacturing according to this example embodiment is not particularly limited. A method of rapidly solidifying powder particles from a molten state, such as a gas atomization method, a water atomization method, a centrifugal atomization method, a plasma atomization method, or a plasma rotating electrode method, is preferably used. From the viewpoint of mass production, the gas atomization method is particularly preferable. The manufactured powder can be classified by a known classifying method under predetermined classifying conditions and adjusted to a copper alloy powder for additive manufacturing with an appropriate particle size. As a classifying apparatus for executing classification, an air flow classifier can suitably be used. Furthermore, the copper alloy powder may undergo mechanical milling or the like. For example, a ball mill method, a bead mill method, a planetary ball mill method, an attritor method, a vibration ball mill method, or the like is used.

### <Manufacturing Method of Additively Manufactured Product>

To manufacture a copper alloy additively manufactured product, various known metal additive manufacturing techniques can be used. For example, in a powder bed fusion method, steps of laying a metal powder on a manufacturing stage while smoothing it by a blade or a roller to form a powder layer, and irradiating a predetermined position of the formed powder layer with a laser or electron beam to sinter/melt the metal powder are repetitively performed, thereby producing an additively manufactured product. In the manufacturing process of metal additive manufacturing, it is necessary to control a very large number of process parameters to obtain a high-quality additively manufactured product.

In the laser powder bed fusion method, many scanning conditions such as a laser output and a laser scanning speed exist. Hence, when setting optimum scanning conditions, main parameters are adjusted using an energy density that is an index comprehensively representing the main parameters. Letting P [W] be the laser output, v [mm/s] be the laser scanning speed, s [mm] be the laser scanning pitch, and t [mm] be the thickness of the powder layer, an energy density E [J/mm³] is decided by E = P/(v × s × t). In the laser powder bed fusion method, the energy density is preferably 150 J/mm³ or more to 450 J/mm³ or less. If the energy density is less than 150 J/mm³, an unmolten part or a melting failure occurs in the powder layer, and a defect such as a void occurs in the additively manufactured product.

If the energy density exceeds 450 J/mm³, sputtering occurs to make the surface of the powder layer unstable, and a defect such as a void occurs in the additively manufactured product. In the electron beam powder bed fusion method, if negative charges are accumulated in the powder layer to cause charge-up when the powder layer is irradiated with an electron beam, a smoke phenomenon that the powder is thrown up like a fog occurs, resulting in a melting failure. Hence, to prevent the charge-up, a preliminary step of preheating and temporarily sintering the powder layer is necessary. However, if the preheating temperature is too high, sintering progresses to cause necking, and the remaining powder is difficult to remove from the additively manufactured product after manufacturing. Hence, in the copper alloy powder for additive manufacturing, the preheating temperature is preferably set to 400°C to 800°C. Note that the metal additive manufacturing technique using the powder bed fusion method has been exemplified here. The general additive manufacturing method of manufacturing an additively manufactured product using the copper alloy powder for additive manufacturing according to the present invention is not limited to this, and, for example, an additive manufacturing method using a directed energy deposition method may be employed.

### <Method of Measuring Relative Density>

As a method of measuring the relative density, there are provided (1) a method of manufacturing an additively manufactured product using a 3D powder additive manufacturing apparatus and calculating the relative density (%) as a sectional area ratio by subtracting the porosity of the section of the additively manufactured product from 100, and (2) a method of manufacturing an additively manufactured product using a 3D powder additive manufacturing apparatus, measuring the density of the obtained additively manufactured product by the Archimedes method, and calculating the relative density (%) by setting a theoretical density (the density of a molten material having the same composition as the additively manufactured product) to 100%. In this example embodiment, the method of (1) is employed.

According to this example embodiment, (1) the coarse powder content, as a powder characteristic for forming a high-density, stable powder bed, was defined as the "-63µm + 45µm sieve particle size (mass %)" obtained using the "JIS Z 8815:1994 Sieve Analysis Test Method," and (2) the particle size of fine powder is defined by "D5 (µm)" as determined by laser diffraction. These enabled the stable formation of a high-quality powder bed, achieving a high relative density (99% or higher) for the layered structure.

### [Second Example Embodiment]

A nickel alloy powder (an alloy powder with nickel as a main constituent element) will be described as a metal powder for additive manufacturing according to the second example embodiment.

The nickel alloy powder according to this example embodiment contains 50.88 mass% of an additive element N (at least one element of Al, Si, Ti, Cr, Mn, Fe, Co, Nb, and Mo), and the balance is nickel and unavoidable impurities.

The additive element N is added to improve the characteristics of the nickel alloy powder, the characteristics at the time of additive manufacturing, and the characteristics (mechanical characteristics and physical characteristics) of an additively manufactured product. However, this example embodiment has found a condition for specifying such nickel alloy powder that a powder bed is stably generated and the relative density of the additively manufactured product is stabilized at 99% or higher. Therefore, the range of addition amount of each element of the additive element N is not limited and can appropriately be selected.

A manufacturing method of the nickel alloy powder, a manufacturing method of additively manufactured product using the nickel alloy powder, and a method of measuring a relative density are the same as those for the copper alloy powder according to the first example embodiment and a repetitive description thereof will be omitted.

According to this example embodiment, (1) the coarse powder content of the nickel alloy powder is defined as the "-63µm + 45µm sieve particle size (mass %)" obtained using the "JIS Z 8815:1994 Sieve Analysis Test Method," to form a high-density, stable powder bed and (2) the particle size of the nickel alloy powder is defined by "D5 (µm)" as determined by laser diffraction to achieve flowability. These enabled the stable formation of a high-quality powder bed, achieving a high relative density (99% or higher) for the layered structure.

### [Other Example Embodiments]

The definition that the -63 µm +45 µm sieve particle size (mass%) is 9% or higher and the particle size D5 (µm) is 9 µm or more for a metal powder for additive manufacturing or an alloy powder for additive manufacturing used to form a stable powder bed for obtaining a high-density additively manufactured product having a relative density of 99% or higher is not limited to copper, nickel, or an alloy thereof described in the first and second example embodiments. The definition that the -63 µm +45 µm sieve particle size (mass%) is 9% or higher and the particle size D5 (µm) is 9 µm or more is a universal definition independent of the type of the metal or the type of the alloy.

### Example 1

An experiment was performed in various combinations of metals and elements for metals containing only unavoidable impurities or alloys with different main constituent elements with respect to the relationship among the -63 µm +45 µm sieve particle size (mass%), the particle size D5 (µm), the quality and stability of formation of a powder bed, and the relative density of an additively manufactured product. Figs. 6A to 9B show experimental results. Examples 101 to 122 and comparative examples 101 to 111 indicate experimental results of a copper powder or a copper alloy powder, and example 201 indicates the experimental result of a nickel alloy powder.

The quality (O: good, Δ: unstable, ×: poor) of formation of a powder bed shown in Figs. 6A to 9B was evaluated by forming a powder bed using a metal powder for additive manufacturing or an alloy powder for additive manufacturing, as shown in Fig. 2. In example 110 (201 in Fig. 2), a uniform powder bed was formed (O). In comparative example 104 (202 in Fig. 2), partial clumping of the powder occurred and a powder bed was unstable (Δ). In comparative example 109 (203 in Fig. 2), a powder bed was incompletely formed, and it was impossible to perform manufacturing (×). The -63 µm +45 µm sieve particle size (mass%) or the particle size D5 outside the predetermined range is indicated within a thick frame in Fig. 7B.

The relative density of the additively manufactured product shown in Figs. 6A to 9B was obtained by a method of manufacturing an additively manufactured product using a 3D powder additive manufacturing apparatus and calculating the relative density (%) as a sectional area ratio by subtracting the porosity of the section of the additively manufactured product from 100.

In Figs. 6A, 6B, 7A, and 7B (examples 101 to 122 and 201), since the - 63 µm +45 µm sieve particle size (mass%) was 9% or higher and the particle size D5 (µm) was 9 µm or more in various combinations of metals and elements for metals containing only unavoidable impurities or alloys with different main constituent elements, a high-density stable powder bed was formed, and an additively manufactured product having a relative density of 99% or higher was stably manufactured.

On the other hand, in Figs. 8A, 8B, 9A, and 9B, since the -63 µm +45 µm sieve particle size (mass%) was lower than 9% and the particle size D5 (µm) was smaller than 9 µm in various combinations of metals and elements for metals containing only unavoidable impurities or alloys with different main constituent elements, metal powders and alloy powders with which an unstable powder bed with spots was formed and an additively manufactured product having a relative density of 99% or higher was not manufactured are indicated.

In Fig. 3, the quality of formation of the powder bed shown in Figs. 6A to 9B is plotted on a graph with the particle size D5 on the abscissa and the -63 µm +45 µm sieve particle size (mass%) on the ordinate. As shown in Fig. 3, there are powder groups 311 to 314 of the quality of formation of the powder bed with the thresholds as borders, similar to Fig. 1. Fig. 4 shows particle size distributions with the particle size D5 on the abscissa respectively corresponding to the powder groups 311 to 314 shown in Fig. 3.

Referring to Fig. 4, a powder having the particle size D5 smaller than 9 µm and the -63 µm +45 µm sieve particle size (mass%) equal to or higher than 9% has a broad particle size distribution like the particle size distribution 311. Therefore, while a metal powder for additive manufacturing is stored in an additive manufacturing apparatus, segregation occurs, thereby making it impossible to form a stable powder bed before completion of additive manufacturing.

Referring to Fig. 4, a powder having the particle size D5 equal to or larger than 9 µm and the -63 µm +45 µm sieve particle size (mass%) lower than 9% is a powder having fluidity and a sharp satisfactory particle size distribution like the particle size distribution 312. However, the density of the powder bed decreases when particles sizes are too uniform, thereby decreasing the relative density. In addition, a powder manufactured by an atomization method or the like requires sieving within a very narrow particle size range, and thus productivity is low.

Referring to Fig. 4, a powder having the particle size D5 smaller than 9 µm and the -63 µm +45 µm sieve particle size (mass%) lower than 9% is a powder having a particle size distribution with a certain balance like the particle size distribution 314. However, since the entire powder is finely micronized, fluidity is impaired and it becomes impossible to form a powder bed.

By using a metal powder having the particle size distribution 313 as a particle size distribution in Fig. 4, which is managed so that the -63 µm +45 µm sieve particle size (mass%) is 9% or higher and the particle size D5 (volume distribution) by the laser diffraction method is 9 µm or more, a high-density (a relative density of 99% or higher) additively manufactured product is stably obtained.

### Example 2

A cylinder with a maximum thickness of 2 mm and a minimum thickness of 1 mm was manufactured using the copper alloy powder of each of example 110 and comparative example 102 and a leakage check with compressed air of 0.2 MPa was performed. Fig. 5 shows the results of the leakage check with compressed air of 0.2 MPa.

As shown in Fig. 5, a cylinder 501 with a maximum thickness of 2 mm and a minimum thickness of 1 mm was manufactured. The cylinder 501 was applied with compressed air of 0.2 MPa and it was confirmed whether air leakage occurred underwater. No air leakage occurred in a cylinder 502 additively manufactured using the copper alloy powder of example 110. On the other hand, air leakage occurred in a cylinder 503 additively manufactured using the copper alloy powder of comparative example 102. It was considered that since the relative density of the cylinder 503 was in the 98% range and open pores occurred, air leakage occurred.

This application is based upon and claims the benefit of priority from Japanese patent application No. 2023-188963, filed on November 3, 2023, the disclosure of which is incorporated herein in its entirety by reference.

## Claims

1. A metal powder for additive manufacturing containing copper as a main constituent and used to manufacture an additively manufactured product by an additive manufacturing method of forming a powder bed, wherein
the metal powder contains, as an additive element, at least one of not less than 0.01 mass% to not more than 3.92 mass% of Al, not less than 0.01 mass% to not more than 0.97 mass% of Si, not less than 0.01 mass% to not more than 0.14 mass% of P, not less than 0.01 mass% to not more than 1.33 mass% of Cr, not less than 0.01 mass% to not more than 0.29 mass% of Fe, not less than 0.06 mass% to not more than 4.08 mass% of Ni, not less than 0.04 mass% to not more than 0.31 mass% of Zr, not less than 0.24 mass% to not more than 5.09 mass% of Sn, not less than 0.01 mass% to not more than 0.21 mass% of Mg, and not less than 0.01 mass% to not more than 32.0 mass% of Zn, and the balance is copper and unavoidable impurities, and
a -63 µm +45 µm sieve particle size (mass%) is not lower than 9% and a particle size D5 is not smaller than 9 µm.

2. A metal powder for additive manufacturing containing nickel as a main constituent and used to manufacture an additively manufactured product by an additive manufacturing method of forming a powder bed, wherein
the metal powder contains at least one element of Al, Si, Ti, Cr, Mn, Fe, Co, Nb, and Mo as 50.88 mass% of an additive element N, the balance is nickel and unavoidable impurities, a -63 µm +45 µm sieve particle size (mass%) is not lower than 9%, and a particle size D5 is not smaller than 9 µm.

3. The powder according to claim 1 or 2, wherein the -63 µm +45 µm sieve particle size (mass%) is a value obtained by test sieving defined in JIS Z 8815: 1994, and the particle size D5 is a value obtained by a laser diffraction method.

4. An additively manufactured product additively manufactured by an additive manufacturing method of forming a powder bed using a metal powder for additive manufacturing defined in claim 1, wherein
the metal powder contains, as an additive element, at least one of not less than 0.01 mass% to not more than 3.92 mass% of Al, not less than 0.01 mass% to not more than 0.97 mass% of Si, not less than 0.01 mass% to not more than 0.14 mass% of P, not less than 0.01 mass% to not more than 1.33 mass% of Cr, not less than 0.01 mass% to not more than 0.29 mass% of Fe, not less than 0.06 mass% to not more than 4.08 mass% of Ni, not less than 0.04 mass% to not more than 0.31 mass% of Zr, not less than 0.24 mass% to not more than 0.97 mass% of Sn, not less than 0.01 mass% to not more than 0.21 mass% of Mg, and not less than 0.01 mass% to not more than 32.0 mass% of Zn, and the balance is copper and unavoidable impurities, and
a sectional area ratio obtained by subtracting porosity of a section of the additively manufactured product from 100 is not lower than 99.0%.

5. An additively manufactured product additively manufactured by an additive manufacturing method of forming a powder bed using a metal powder for additive manufacturing defined in claim 2, wherein
the metal powder contains at least one element of Al, Si, Ti, Cr, Mn, Fe, Co, Nb, and Mo as 50.88 mass% of an additive element N, and the balance is nickel and unavoidable impurities, and
a sectional area ratio obtained by subtracting porosity of a section of the additively manufactured product from 100 is not lower than 99.0%.
